**Europäisches Patentamt**

**European Patent Office**

**Office européen des brevets**

(19)

(11) Publication number : **0 485 070 A2**

(12) **EUROPEAN PATENT APPLICATION**

(21) Application number : **91309181.5**

(22) Date of filing : **07.10.91**

(51) Int. Cl.⁵ : **H04B 13/02, H04B 10/10**

Priority 250491 BR 9005004 Complete Specification.

(30) Priority : **05.10.90 BR 9005004**

(43) Date of publication of application :
**13.05.92 Bulletin 92/20**

(84) Designated Contracting States :
**DK ES FR GB IT**

(71) Applicant : **PETROLEO BRASILEIRO S.A. PETROBRAS**
**Avenida Republica do Chile, 65**
**Rio de Janeiro (BR)**

(71) Applicant : **PONTIFICIA UNIVERSIDADE CATOLICA - PUC**
**Rue Marques de Sao Vicente no 225**
**Rio de Janeiro (BR)**

(72) Inventor : **Sant'Anna, Antonio Claudio Correia Meyer**
**Rua Desenhista Luiz Guimaraes, No. 87**
**Rio de Janeiro (BR)**
Inventor : **Von der Weild, Jean Pierre**
**Rua Oliveira Rocha, No. 46/101**
**Rio de Janeiro (BR)**
Inventor : **Passy, Rogerio**
**Rua Maestro Francisco Braga, No. 42/204**
**Rio de Janeiro (BR)**

(74) Representative : **Barlow, Roy James et al**
**J.A. KEMP & CO. 14, South Square, Gray's Inn**
**London WC1R 5LX (GB)**

(54) **Undersea communication system.**

(57) An undersea communication system which makes use of the surrounding physical environment (4) for the communication of data among controlling units (1) and the surface, controlling units (1) and remote operation vehicles (ROV) and/or between two controlling units, transmission of data taking place by the modulation of beams of electromagnetic (3) energy in the visible or invisible spectrum, which travel across the physical environment.

FIG 1

**EP 0 485 070 A2**

This invention concerns a subsea communication system for the communicating of data between controlling units and the surface, controlling units and remote operation vehicles and/or between two controlling units through use of beams of electromagnetic waves in the visible or invisible spectrum, thereby bringing about communication between two undersea points apart from one another.

As is known by those versed in the art, exploring for oil in an undersea environment calls for the use of submerged equipment which requires an exchange of information to take place between their several modules, as well as with supporting units afloat on the surface. Such communication is usually done by means of electric and/or optical leads which have drawbacks such as high cost thereof, as well as the need to make use of subsea connectors, the latter kind of equipment always being highly susceptible to letting in water. A less usual answer, though one that is already being followed in some countries, is to have data transmitted by carrier frequency modulation within the sonic or ultrasonic ranges, but this also has some drawbacks.

According to the present invention, there is provided an undersea communication system for the communication of data between controlling units and the surface, controlling units and remote operation vehicles and/or between two controlling units, wherein the transmission of data takes place by the modulation of beams of electromagnetic energy within the visible or invisible spectrum, which travel through the surrounding physical environment.

Preferably, the system consists of an electronic modulating unit for the incoming data source which mixes the information to be transmitted with a carrier frequency, signals being sent to a luminous emitter, which may be a laser emitter, which sends an optical beam through lenses and collimators towards a suitable receiver, the sole transmitting medium being the physical environment, which in this case is the water of the sea which surrounds both units.

With the invention, the quality of such data transmission may be improved and costs brought down. The invention provides an undersea communication system whereby data may be transmitted by the modulation of beams of electromagnetic energy in the visible or invisible light range, making use of only the surrounding physical environment.

The invention will further be understood from the following description, when taken together with the attached drawings, which are given by way of example only, and in which:

Figure 1 shows, schematically, undersea communication between a control unit lying at the bottom of the sea and a floating unit; and

Figure 2 is a diagrammatic view showing how the undersea communication system works, the physical environment being made use of as referred to in this invention.

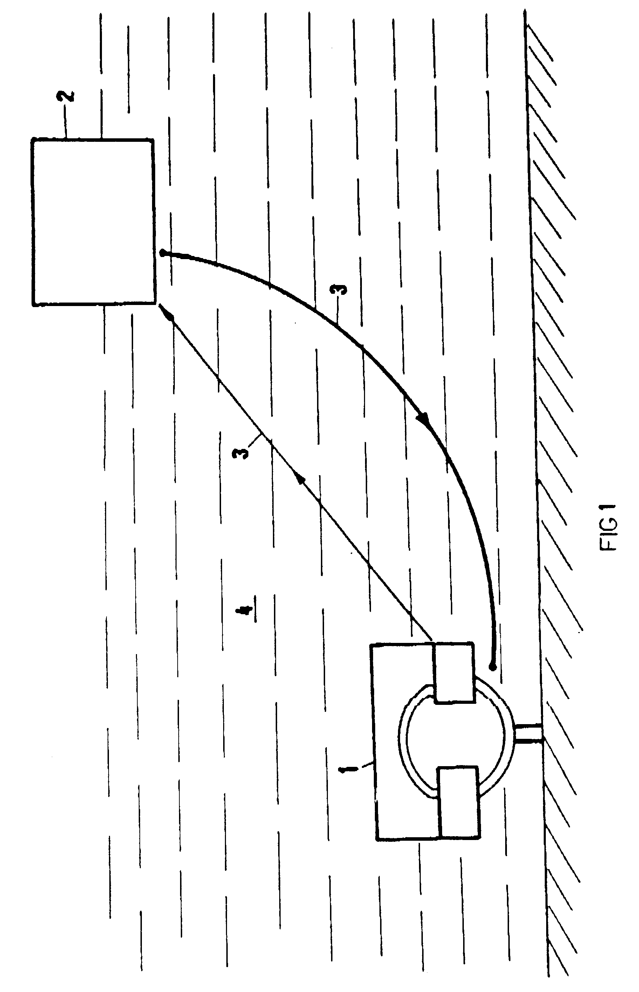

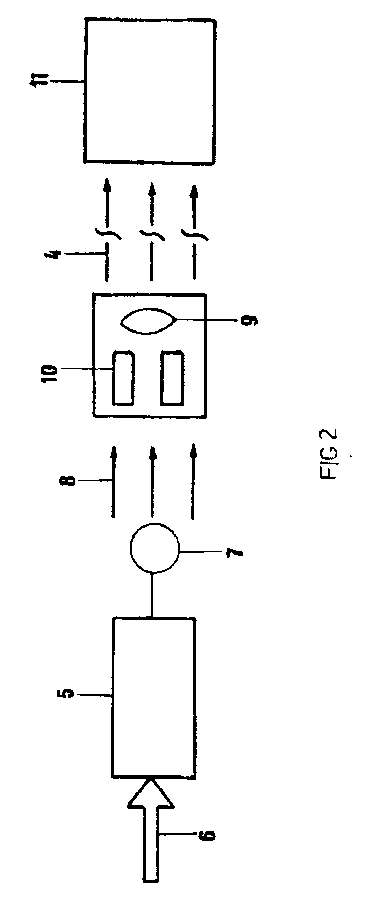

As is to be seen from Figures 1 and 2 the communication of data between a control unit, 1, resting on the bottom of the sea, and a floating unit, 2, is achieved through the use of beams of electromagnetic waves, 3, within the visible or invisible light range, such beams being transmitted through the surrounding physical environment, 4, which in the case in point is the water of the sea. The undersea communication system consists of an electronic modulation unit, 5, for input from the data source, 6, which mixes the information to be transmitted with a carrier frequency, after which the signal goes on to a luminous emitter, 7, usually but not necessarily a laser emitter, which sends an optical beam, 8, through lens, 9, and collimators, 10, towards a suitable receiver, 11, means of transmission used being the physical environment, 4, only, which in the case in point is the water of the sea which surrounds both units 1 and 2, while for data to be transmitted in both direction two like arrays are employed.

It should be pointed out that when communication is among modules or part of the same equipment lying e.g. dozens of meters away from one another the process of lining up the optical beam is done in a fixed and lasting way. Where transmission has to take place at longer distances, as much as a kilometer away, automatic aligning devices have to be used, to continually allow for changes in the position of the floating unit and changes in the parameters of propagation in the environment.

## Claims

1. An undersea communication system for the communication of data between controlling units and the surface, controlling units and remote operation vehicles and/or between two controlling units, wherein the transmission of data takes place by the modulation of beams of electromagnetic energy (3) within the visible or invisible spectrum, which travel through the surrounding physical environment (4).

2. A system according to claim 1 wherein said physical environment (4) is the water of the sea.

3. A system according to claim 1 or 2 further comprising an electronic modulation unit (5) for input from a data source (6), which mixes the information to be sent with a carrier frequency, signals then being sent to a luminous emitter (7) which emits a radiant energy beam (8) through a lens (9) and collimators (10) towards a receiver (11), the surrounding physical environment (4) being the sole transmitting medium.

4. A system according to claim 3, wherein said luminous emitter (7) is a laser emitter.

FIG 1

FIG 2